# EUROPÄISCHE PATENTSCHRIFT

(11) **EP 1 185 961 B1**
(45) Veröffentlichungstag und Bekanntmachung des Hinweises auf die Patenterteilung: **26.02.2003**
(21) Anmeldenummer: 00942064.7
(22) Anmeldetag: 14.06.2000
(51) Int. Cl.: G07F 7/08, G07B 15/02

(54) **ELEKTRONISCHES SYSTEM, WELCHES DEN AUTOMATISCHEN AUSGLEICH VON FORDERUNGEN AUS DER INANSPRUCHNAHME VON DIENSTLEISTUNGEN IN EINER ABGESCHLOSSENEN RÄUMLICHKEIT DARSTELLT**
ELECTRONIC SYSTEM REPRESENTING AUTOMATIC COMPENSATION OF DEMANDS ARISING FROM SERVICE REQUIREMENTS IN A CONFINED AREA
SYSTEME ELECTRONIQUE REPRESENTANT LA COMPENSATION AUTOMATIQUE DE CREANCES DANS LA REVENDICATION DE PRESTATIONS DE SERVICES DANS UN ESPACE FERME

(30) Priorität: 15.06.1999 DE 19927114
(43) Veröffentlichungstag der Anmeldung: 13.03.2002
(73) Patentinhaber: TeraTron GmbH, 51647 Gummersbach (DE)
(72) Erfinder: WEISS, Bernd, 51647 Gummersbach (DE)
(74) Vertreter: Schippan, Ralph, Dr.-Ing.
(86) Internationale Anmeldenummer: EP0005449
(87) Internationale Veröffentlichungsnummer: WO00077749

(56) Entgegenhaltungen:
- EP-A- 0 330 071
- EP-A- 0 465 456
- EP-A- 0 628 928
- EP-A- 0 848 360
- WO-A-89/09459

## Beschreibung

Die vorliegende Erfindung betrifft ein elektronisches System für den automatischen Ausgleich von Forderungen aus der Inanspruchnahme von Dienstleistungen für eine mit einer verschließbaren Öffnung versehene Räumlichkeit.

Systeme für die Verrechnung von Geldeinheiten bei Inanspruchnahme von Dienstleistungen wie zum Beispiel Beförderungsleistungen im Personenverkehr unter Verwendung von elektronischen Systemen auf Basis von Smart-Cards und entsprechend ausgelegten Leseeinheiten verlangen vom Kunden, daß er seinen elektronischen Ausweis bzw. Fahrausweis in eine Öffnung an einem Lesegerät einführt oder mindestens in einer sehr kurzen Distanz von ca. 5 bis 10 cm vor dem Lesebereich des Lesegeräts verweilen lassen muß, um die Willensbekundung der korrekten Fahrt-Entgelt-Abrechnung durchzuführen. Die für diese Systeme erforderliche Verwaltung der personenbezogenen Daten, der Geldoder Entfernungseinheiten, der Verrechnung der Entfernungskilometer oder der Speicherorganisation der Smart-Cards oder Leseeinheiten sind hinlänglich bekannt.

In den bekannten Systemen sind meist alle Zugangseinrichtungen mit Leseeinheiten ausgerüstet, die mindestens die Breite einer Zugangseinrichtung abdecken. Während des Durchgangs durch diese Schleusen, bzw. Öffnungen der jeweiligen Räumlichkeiten oder Fahrzeugkabinen eines Beförderungsmittels werden alle verrechnungsrelevanten Daten ausgetauscht und gleichzeitig eine eindeutige fälschungssichere Identifizierung der jeweiligen Smart-Card durchgeführt.

Von Nachteil ist bei solchen Systemen, daß im Eingangsbereich von z. B. Fahrzeugen die Reichweite der notwendigen Leseeinrichtung nicht eindeutig auf den Durchgangsbereich beschränkt werden kann. Vielmehr ist mit Überreichweiten der Leseeinrichtung auch außerhalb des Fahrzeugs, bzw. der Fahrzeugkabine zu rechnen. Dies konnte zu einer unerwünschten Erfassung von Personen führen, die ebenfalls Träger einer gültigen Smart-Card sind und lediglich am Beförderungsmittel vorbeilaufen, dieses jedoch nicht in Anspruch nehmen. Zudem kann die Bewegungsrichtung der die Schleuse passierenden Person nicht eindeutig festgestellt werden. Dies reduziert die Wahrscheinlichkeit eindeutiger Verrechnungsdaten, vor allem in Situationen notwendiger Hilfeleistungen für andere Fahrgäste. Ebenso ist die Kommunikationszeit mit der Smart-Card auf die reine Durchgangszeit des Kunden durch die Schleuse reduziert, was speziell während Zeiten höchster Frequentierung zu Engpässen in der Datenerfassung führen kann.

EP 0 330 071 A zeigt ein Zahlsystem für die Benutzung von Transportmitteln mit einem elektronischen Fahrausweis für Transportmittel-Benutzer, wobei der elektronische Fahrausweis ein Datenverarbeitungssystem mit Speicher und Sende-Empfangsmitteln enthält. Jede Transportzelle besitzt eine Sende-Empfangeeinrichtung, einen Mikrorechner und beim Fahrgasteingang ein Eingangsterminal mit Sende-Empfangsmitteln. Der Mikrorechner ist mit der Sende-Empfangseinrichtung und dem Eingangsterminal verbunden und die Informationsaustauschvorgänge zwischen einerseits dem elektronischen Fahrausweis und andererseits der Sende-Empfangseinrichtung und dem Eingangsterminal erfolgt durch drahtlose Übertragung, wobei die Sende-Empfangseinrichtung eine gleichzeitige Verbindung mit allen in der Transportzelle vorhandenen Fahrausweisen während der Fahrt erlaubt.

Aufgabe der vorliegenden Erfindung ist es daher, ein elektronisches System bereitzustellen, bei dem die Erfassungszeit der in Anspruch genommenen Dienstleistung nicht lediglich auf die Durchgangszeit durch die Schleuse bzw. Öffnung beschränkt ist und bei der Personen außerhalb der Räumlichkeit nicht fälschlicherweise für die nicht in Anspruch genommenen Dienstleistungen in Anspruch genommen werden.

Diese Aufgabe wird erfindungsgemäß mit einem elektronischen System mit den Merkmalen des Anspruchs 1 gelöst.

Weitere erfindungsgemäße Ausgestaltungen des elektronischen Systems gemäß Anspruch 1 ergeben sich durch die Merkmale der Unteransprüche.

Bei dem erfindungsgemäßen System werden vorteilhaft nur dann die in Anspruch genommenen Leistungen der eine Informationseinheit tragenden Person berechnet, wenn sich die Räumlichkeit, in der bzw. mit der die Dienstleistung erbracht wird, verschlossen ist und sich die Person in der Räumlichkeit aufhält. Diese Situation ist speziell im Bereich der Personenbeförderung anzutreffen. Sofern eine Person lediglich einen Bus besteigt, dieser jedoch seine Türen noch nicht verschlossen hat, wird die Person auch nicht von einem Ort zum anderen transportiert. In diesem Fall wird von der Person noch keine Dienstleistung beansprucht. Sofern sich der Bus in Bewegung setzten soll, müssen dessen Türen zuerst verschlossen werden. Das elektronische System erfaßt das Schließen der Bustür und beginnt, über die in der Fahrgastzelle des Busses verteilt angeordneten Wirkeinrichtungen oder lediglich einer Wirkeinrichtung mit den Informationseinheiten der im Bus befindlichen Personen zu kommunizieren. Das elektronische System kann sich dabei bekannter Übertragungsprotokolle und Abrechnungsmethoden bedienen. Die Fahrt von einem Ort zum anderen dauert in der Regel einige Minuten, so daß vorteilhaft genügend Zeit für das elektronische System verbleibt, um eine Kommunikation mit allen im Bus befindlichen Informationseinheiten durchzuführen.

Die Wirkeinrichtungen sind vorteilhaft so in der Räumlichkeit bzw. Fahrgastzelle anzuordnen, daß die maximale Reichweite der Funkstrecken zwischen Wirkeinrichtung und Informationseinheit an keiner Position in der Räumlichkeit überschritten wird.

Sofern mehrere Wirkeinrichtungen in der Räumlichkeit angeordnet sind, können diese vorteilhaft auch zeitgleich mit verschiedenen Informationseinheiten kommunizieren, so daß vorteilhaft die Zeit für das Erfassen sämtlicher in der Räumlichkeit befindlichen Informationseinheiten reduziert wird.

Durch das Öffnen und Schließen der Öffnung der Räumlichkeit kann das elektronische System z. B. erfassen, wie viele Haltestellen und/oder welche Strecke die beförderte Person mit dem Beförderungsmittel zurückgelegt hat. Es ist ebenfalls denkbar, daß das elektronische System mit einem Navigationssystem oder aber dem Wegstreckenmeßgerät des Beförderungsmittels verbunden ist, so daß die exakte Beförderungsstrecke feststellbar und somit abrechenbar ist.

Sofern die Räumlichkeit bzw. ein Beförderungsmittel mehrere Öffnungen bzw. Türen hat, beginnt das elektronische Beförderungssystem in einer weiteren Ausführungsform erst dann über seine Wirkeinrichtung mit den in der Räumlichkeit befindlichen Informationseinheiten zu kommunizieren, wenn sämtliche dieser Öffnungen bzw. Türen verschlossen sind oder im Begriff sind, geschlossen zu werden.

Die Informationseinheiten sowie die Wirkeinheiten verfügen in einer besonderen Ausführungsvariante des erfindungsgemäßen Systems über jeweils eine Empfangs- und eine Sendeeinrichtung, so daß eine bidirektionale Kommunikation zwischen der Wirk- und der Informationseinheit möglich ist.

Nachfolgend wird anhand der Figuren eine mögliche Ausführungsform des elektronischen Systems näher erläutert.

Es zeigen:
- Fig. 1:: eine Räumlichkeit mit einem erfindungsgemäßen elektronischem System mit geöffneter Tür;
- Fig. 2:: die Räumlichkeit gemäß Fig. 1 mit geschlossener Tür.

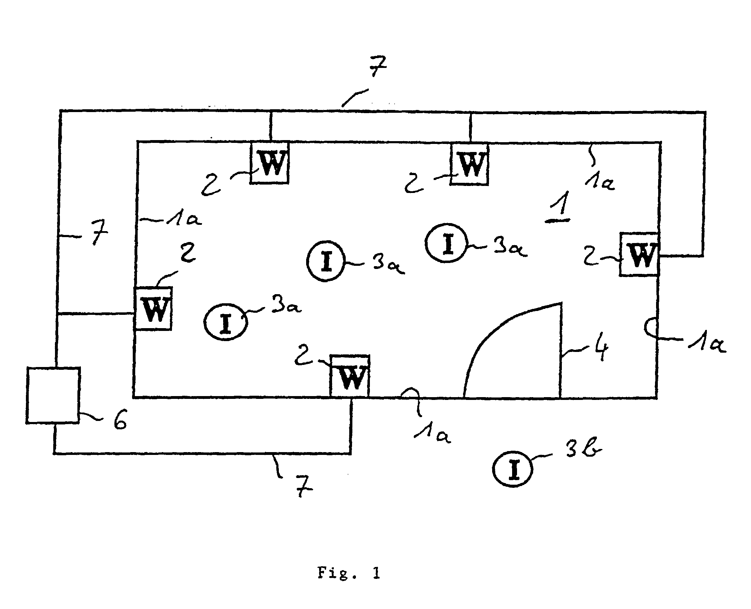

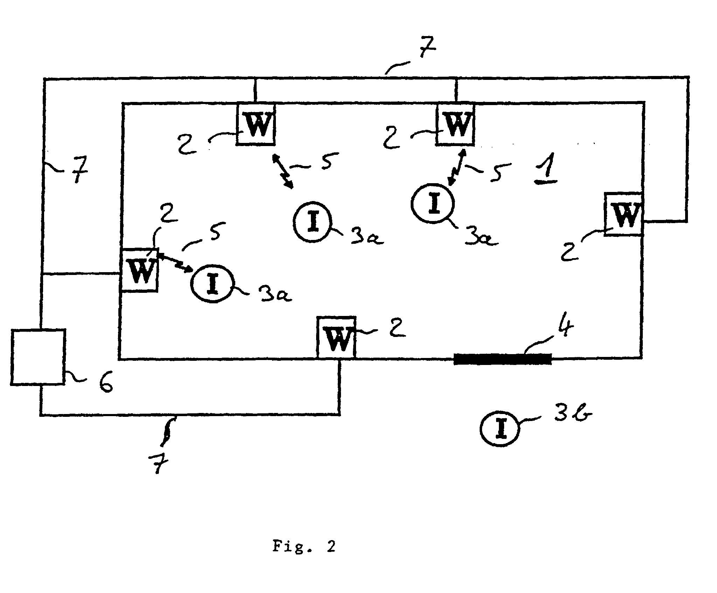

Die Fig. 1 zeigt eine Räumlichkeit 1, in der an den Wänden 1a Wirkeinrichtungen 2 verteilt angeordnet sind, die über Datenleitungen 7 mit einer Datenverarbeitungsanlage 6 kommunizieren. Die Räumlichkeit 1 hat eine Tür 4, die in Fig. 1 geöffnet und in Fig. 2 geschlossen ist. Die Informationseinheiten 3a befinden sich innerhalb der Räumlichkeit 1. Die Informationseinheit 3b befindet sich außerhalb der Räumlichkeit 1. Solange die Tür 4, wie in Fig. 1 dargestellt ist, geöffnet ist, findet keine Kommunikation zwischen den Wirkeinrichtungen 2 und den Informationseinheiten 3a oder 3b statt. Sobald, wie in Fig. 2 dargestellt, die Tür 4 geschlossen wird, beginnen die Wirkeinrichtungen 2 gleichzeitig oder nacheinander mit den in der Räumlichkeit 1 befindlichen Informationseinheiten 3a zu kommunizieren, was mit den bi-direktionalen Pfeilen 5 dargestellt ist. Eine Kommunikation der Wirkeinrichtungen 2 mit der Informationseinheit 3b, welche sich außerhalb der Räumlichkeit 1 befindet, kann nicht stattfinden, da die Wirkeinrichtungen 2 so ausgerichtet sind, daß sie lediglich mit Informationseinheiten 3a, die innerhalb der Räumlichkeit 1 befindlich sind, kommunizieren können.

Der Ablauf der Kommunikation bzw. das Übertragungsprotokoll oder die Abrechnungsmethoden sind frei wählbar. Die Erfindung bezieht sich nicht auf ein bestimmtes Übertragungsprotokoll oder Abrechnungssystem, da dieses je nach Einsatzgebiet bzw. je nach angebotener Dienstleistung verschieden ausgestaltet werden muß.

Es versteht sich von selbst, daß die Informationseinheiten auch Bestandteil schon bekannter elektronischer Komponenten, wie z. B. Handys, Personal Organizer, Laptops, Uhren etc. sein können, so daß diese nicht als ein gesondertes elektronisches Gerät von der die Dienstleistung beanspruchenden Person mit sich getragen werden muß.

## Patentansprüche

1. Elektronisches System für den automatischen Ausgleich von Forderungen aus der Inanspruchnahme von Dienstleistungen für eine mit einer verschließbaren Öffnung versehene Räumlichkeit, wobei ein sich in der Räumlichkeit aufhaltender die Dienstleistung Beanspruchender, eine Informationseinheit (3a, 3b) hat, die auf elektromagnetischem Weg mit mindestens einer Wirkeinrichtung (2) der Räumlichkeit (1) Informationen austauscht oder von der Wirkeinrichtung (2) empfangene Informationen speichert, **dadurch gekennzeichnet, daß** durch das Verschließen der zumindest einen Öffnung (4) der Räumlichkeit (1) der Vorgang des Ansprechens sämtlicher in der Räumlichkeit (1) befindlicher Informationseinheiten (3a) durch die mindestens eine Wirkeinrichtung (2) gestartet wird.

2. Elektronisches System nach Anspruch 1, **dadurch gekennzeichnet, daß** die Informationseinheit (3a) die empfangenen Informationen für begrenzte Zeit speichert.

3. Elektronisches System nach Anspruch 1 oder 2, **dadurch gekennzeichnet, daß** die mindestens eine Wirkeinrichtung (2) innerhalb der Räumlichkeit (1) angebracht ist.

4. Elektronisches System nach Anspruch 3, **dadurch gekennzeichnet, daß** die mindestens eine Wirkeinrichtung (2) an einer Position in der insbesondere abgeschlossenen Räumlichkeit (1) angebracht ist, die insbesondere zu den Begrenzungen (1a) der Räumlichkeit (1) möglichst äquidistant ist, jedoch mindestens eine Ebene der begrenzenden Flächen (1a) auch Montagefläche der Wirkeinrichtung (2) ist.

5. Elektronisches System nach einem der vorhergehenden Ansprüche, **dadurch gekennzeichnet, daß** die Wirkeinrichtung (2) im Zentrum der Räumlichkeit (1) angeordnet ist.

6. Elektronisches System nach einem der vorhergehenden Ansprüche, **dadurch gekennzeichnet, daß** mehrere Wirkeinrichtungen (2)insbesondere gleichmäßig über mindestens eine der begrenzenden Flächen (1a) der Räumlichkeit (1) verteilt angeordnet sind.

7. Elektronisches System nach einem der vorhergehenden Ansprüche, **dadurch gekennzeichnet, daß** mittels der mindestens einen Wirkeinrichtung (2) nach jedem Verschluß der Räumlichkeit (1) alle in der Räumlichkeit (1) vorhandenen Informationseinheiten (3a) angesprochen und jede Informationseinheit (3a) ihre elektronische Kennzeichnung und/oder zusätzliche Daten an die mindestens eine Wirkeinrichtung (2) überträgt.

8. Elektronisches System nach einem der vorhergehenden Ansprüche, **dadurch gekennzeichnet, daß** aus den Differenzen der elektronischen Kennzeichnungen und/oder der zusätzlichen Daten zwischen jedem Verschließen der Räumlichkeit (1), die Dienstleistungsinanspruchnahmen vom System ermittelt werden.

9. Elektronisches System nach Anspruch 8, **dadurch gekennzeichnet, daß** das System entsprechend der beanspruchten Dienstleistung(-en) und anhand der übermittelten Kennzeichnung einen der beanspruchten Dienstleistung entsprechenden Geldwert von dem die Dienstleistung Beanspruchenden

10. Elektronisches System nach einem der vorhergehenden Ansprüche, **dadurch gekennzeichnet, daß** die Räumlichkeit (1) eine Fahrgastzelle einer Beförderungseinrichtung, insbesondere eines Busses, eines Schienenfahrzeugs oder eines Flugzeugs ist.

11. Elektronisches System nach einem der vorhergehenden Ansprüche, **dadurch gekennzeichnet, daß** die Öffnung (4) ein verschließbarer Durchgang, insbesondere eine Tür ist.

12. Elektronisches System nach einem der vorhergehenden Ansprüche, **dadurch gekennzeichnet, daß** die Informationseinheit (3a, 3b) eine Empfangsund eine Sendeeinrichtung aufweist.

13. Elektronisches System nach einem der vorhergehenden Ansprüche, **dadurch gekennzeichnet, daß** die Wirkeinheit (2) eine Empfangs- und eine Sendeeinrichtung aufweist.

14. Elektronisches System nach einem der vorhergehenden Ansprüche, **dadurch gekennzeichnet, daß** die mindestens eine Wirkeinheit (2) mit einer zentralen Datenverarbeitungsanlage (6) über Funk oder Datenleitungen (7) kommuniziert.

15. Elektronisches System nach einem der vorhergehenden Ansprüche, **dadurch gekennzeichnet, daß** die Informationseinheit (3a, 3b) ein Werteguthaben speichert, und nach jedem Verschließen der Räumlichkeit (1) ein der beanspruchten Dienstleistung entsprechender Geldbetrag aufgrund der Kommunikation der Informationseinheit (3a) mit einer Wirkeinheit (2) von dem Werteguthaben abgezogen wird und der neue Betrag des Werteguthabens von der Informationseinheit (3a) gespeichert wird.

## Claims

1. An electronic system for automatically balancing demands from the utilization of services for a site provided with a sealable opening, wherein a person requesting the service located in the site has an information unit (3a, 3b) that electromagnetically exchanges information with at least one active component (2) in the site (1), or stores information received from the active component (2), **characterized in that** the process by which all information units (3a) located in the site (1) respond is initiated by the at least one active component (2) when closing the at least one opening (4) of the site (1).

2. The electronic system according to claim 1, **characterized in that** the information unit (3a) stores the received information for a limited time.

3. The electronic system according to claim 1 or 2, **characterized in that** the at least one active component (2) is secured inside the site (1).

4. The electronic system according to claim 3, **characterized in that** the at least one active component (2) is secured in a position within in particular the site (1) that is as equidistant to the limits (1a) of the site (1) as possible, but at least one plane of the limiting surfaces (1a) is also the mounting surface for the active component (2).

5. The electronic system according to one of the preceding claims, **characterized in that** the active component (2) is situated in the center of the site (1).

6. The electronic system according to one of the preceding claims, **characterized in that** several active components (2) are distributed in particular uniformly over at least one of the limiting surfaces (1a) of the site (1).

7. The electronic system according to one of the preceding claims, **characterized in that** all information units (3a) present in the site (1) respond via the at least one active component (2) after each closure of the site (1), and each information unit (3a) transmits its electronic characteristic and/or additional data to the at least one active component (2).

8. The electronic system according to one of the preceding claims, **characterized in that** the services used are determined by the system from the differences in electronic characteristics and/or the additional data between each closure of the site (1).

9. The electronic system according to claim 8, **characterized in that** the system determines a monetary value corresponding to the used service for the person using the service based on the used service(s) and the transmitted characteristic.

10. The electronic system according to one of the preceding claims, **characterized in that** the site (1) is a passenger cell of a transportation means, in particular a bus, a railway vehicle or an airplane.

11. The electronic system according to one of the preceding claims, **characterized in that** the opening (4) is a sealable passage, in particular a door.

12. The electronic system according to one of the preceding claims, **characterized in that** the information unit (3a, 3b) has a receiver and a transmitter.

13. The electronic system according to one of the preceding claims, **characterized in that** the active component (2) has a receiver and transmitter.

14. The electronic system according to one of the preceding claims, **characterized in that** the at least one active component (2) communicates with a central data processor (6) by radio or over data lines (7)

15. The electronic system according to one of the preceding claims, **characterized in that** the information unit (3a, 3b) stores a credit, and deducts a sum of money from the credit after the site (1) is closed corresponding to the used service based on the communication of the information unit (3a) with an active component (2), and the new credit is stored by the information unit (3a).

## Revendications

1. Système électronique pour le paiement automatique de créances issues de l'utilisation de prestations de services pour un local comportant une ouverture pouvant être verrouillée, un utilisateur de prestations de services se tenant dans le local ayant une unité d'information (3a, 3b) qui échange par voie électromagnétique des informations avec au moins une installation active (2) du local (1) ou enregistre des informations reçues de l'installation active (2), **caractérisé en ce que**, pour fermer l'ouverture (4) présente en au moins un exemplaire du local (1), l'opération d'interrogation de toutes les unités d'information (3a) se trouvant dans le local (1) est lancée par l'installation active (2) présente au moins en un exemplaire.

2. Système électronique selon la revendication 1, **caractérisé en ce que** l'unité d'information (3a) enregistre les informations reçues pour un temps limité.

3. Système électronique selon la revendication 1 ou 2, **caractérisé en ce que** l'installation active (2) présente au moins en un exemplaire est disposée à l'intérieur du local (1).

4. Système électronique selon la revendication 3, **caractérisé en ce que** l'installation active (2) présente au moins en un exemplaire est disposée dans le local (1) particulièrement fermé dans une position qui est particulièrement aussi équidistante que possible des limitations (1a) du local (1), mais qu'au moins un plan des surfaces de limitation (1a) est aussi la surface de montage de l'installation active (2).

5. Système électronique selon une des revendications précédentes, **caractérisé en ce que** l'installation active (2) est disposée au centre du local (1).

6. Système électronique selon une des revendications précédentes, **caractérisé en ce que** plusieurs installations actives (2) sont notamment disposées réparties régulièrement sur au moins une des surfaces de limitation (1a) du local (1).

7. Système électronique selon une des revendications précédentes, **caractérisé en ce que** les unités d'information disponibles dans le local (1) sont interrogées après chaque fermeture du local (1) au moyen de l'installation active (2) présente en au moins un exemplaire et que chaque unité d'information (3a) transfère son identification électronique et/ou des données supplémentaires à l'installation active (2) présente en au moins un exemplaire.

8. Système électronique selon une des revendications précédentes, **caractérisé en ce que** les utilisations de prestations de services sont établies par le système à partir des différences des identifications électroniques et/ou des données supplémentaires entre chaque fermeture du local (1).

9. Système électronique selon la revendication 8, **caractérisé en ce que** le système détermine en fonction du(des) service(s) utilisé(s) et sur la base de l'identification transmise une valeur monétaire correspondant aux prestations pour l'utilisateur de celles-ci.

10. Système électronique selon une des revendications précédentes, **caractérisé en ce que** le local (1) est une cabine de passagers d'un dispositif de transport, notamment d'un bus, d'un véhicule ferroviaire ou d'un avion.

11. Système électronique selon une des revendications précédentes, **caractérisé en ce que** l'ouverture (4) est un passage pouvant être fermé, notamment une porte.

12. Système électronique selon une des revendications précédentes, **caractérisé en ce que** l'unité d'information (3a, 3b) présente un dispositif de réception et d'émission.

13. Système électronique selon une des revendications précédentes, **caractérisé en ce que** l'unité active (2) présente un dispositif de réception et d'émission.

14. Système électronique selon une des revendications précédentes, **caractérisé en ce que** l'unité active (2) présente en au moins un exemplaire communique avec une installation informatique centrale (6) par radio ou lignes de transfert de données (7).

15. Système électronique selon une des revendications précédentes, **caractérisé en ce que** l'unité d'information (3a, 3b) enregistre une valeur d'avoir et qu'après chaque fermeture du local (1), un montant monétaire correspondant à la prestation de service utilisée est soustrait de la valeur de l'avoir sur la base de la communication de l'unité d'information (3a) avec une unité active (2) et que le nouveau montant de l'avoir est enregistré par l'unité d'information (3a).
